# EUROPEAN PATENT APPLICATION

(11) **EP 2 179 979 A1**
(43) Date of publication of application: **28.04.2010**
(21) Application number: 09156920.2
(22) Date of filing: 31.03.2009
(51) Int. Cl.: C05F 17/00

(54) **Method for the production of an agent for treatment of agricultural soils**

(30) Priority: 24.10.2008 IT TO20080784
(71) Applicant: Terra S.r.l. Ricerca& Sviluppo, 12011 Borgo San Dalmazzo (CN) (IT)
(72) Inventor: Bertolotto, Antonio, 12010, Vignolo (Cuneo) (IT)
(74) Representative: Freyria Fava, Cristina

(57) **Abstract**

A method for the production of an agent for the treatment of agricultural soils starting from biomasses of animal origin, comprising:
a) an enzymatic microbial digestion of the biomasses performed enzymatically and operated through inoculation with a consortium of microorganisms susceptible of activating the above-said digestion;
b) a vermicomposting of the solid fraction obtained in phase a);
c) a fungal-bacterial metabolization phase of the solid fraction obtained in phase b),

wherein the fungal-bacterial metabolization envisions:
c1) at least one inoculation of the solid fraction with a consortium of microorganisms susceptible of activating a further digestion;
c2) movement and oxidation of the solid fraction;
c3) at least one injection of warm air into the solid fraction,

so to obtain said agent for the treatment of agricultural soils.

## Description

The present invention concerns a method for the production of an agent for the treatment of agricultural soils.

The field of agricultural has undergone a notable change in the last 50 years. In fact, high-density cattle, hog and poultry livestock farms have been created for the production of milk and meat and for reproduction. Monocultures have been developed over vast expanses of land and, due to the intensive exploitation of forests and then of the forest humus, we are witnessing a desertification process of many areas.

At one time the planet was subdivided into two zones: the first constituted of forests and prairies, in which man was a guest who harvested the fruits and the second constituted of traditional farms with farmers who practiced auto-fertilization and crop rotation; under such conditions man operated in a manner that did not cause damage to the soil itself.

With world population increase and the consequent increase in demand for food, modern man has begun the destruction of the forest system, cementing many prairies with cities and roads, rendering chemical dependent and monocultural much of the land taken from the forests and prairies and creating high-density livestock farms causing damage, at times notable, in all these environments. The intensive livestock farms, in particular, have generated great quantities of animal waste that have polluted the soil, the subsoil and the water table, introducing, for example, excessive nitrate and phosphate loads. While monocultures have depleted the agricultural soils, which need continuous chemical fertilization to remain productive.

Therefore, the need is felt to intervene in this cycle identifying a process that allows an intelligent transformation of the animal wastes and that, at the same time, leads to the production an agent for the treatment of agricultural soils, especially for those agricultural soils that are depleted or damaged.

According to the present invention, such object is achieved by means of the solution specifically recalled in the claims that follow. The claims form an integral part of the technical teaching provided herein relative to the invention.

One embodiment of the present invention concerns a method that leads to the production, through suitable treatment of animal wastes, of an agent, in particular a microbiologically stable agent capable of improving the health status of depleted soils, for the treatment of agricultural soils.

In a particular embodiment, which begins with the preparation of a dedicated mix of animal wastes and possibly vegetable biomasses, equilibrated in carbon content and in microbial charge, inoculated with special microorganisms, the process initiated thusly. Such method foresees a first phase of biomass digestion possibly predisposed in this way, operated through the enzymatic action of a specific microbial component with the production of a liquid fraction to be used in the cultivation of algae or other hydroponic cultures and of a solid fraction that, subjected to a vermicomposting phase and a successive fungal-bacterial metabolization, provides an agent for the treatment of agricultural soils, also defined as an organic microbiological restructuring product, preferably usable for the treatment of agricultural soils depleted and/or compromised by pollution from pesticides, weed killers and chemical fertilizers.

The invention will now be described in detail, by way of non-limiting example only with reference to several preferred embodiments.

Generally, the method described herein envisions a first phase of anaerobic digestion, of the biomass of animal and possibly vegetable origin, previously mixed, operated through the enzymatic action of a microbial component by inoculation of a consortium of microorganisms susceptible of conducting the above-said digestion. Next follows a second phase of vermicomposting of the solid fraction obtained from the preceding digestion, obtaining a fraction called "earthworm humus". Successive to the vermicomposting phase, which has a duration of six - twelve months, the solid fraction is subjected to a fungal-bacterial metabolization phase having a duration of 12-14 months. During these phases the biomasses - which had already been partially digested in the first digestion phase and in the second phase of vermicomposting - remain in the field arranged in specific piles and, by means of periodic inoculations with a consortium of specialized microorganisms, are subjected to further aerobic digestion performed through the injection of air combined with movements on a defined schedule and correlated with lunar phases. This phase provides a microbiologically stable humus, that is, one having a charge of fungal-bacterial microbes that remains essentially unaltered over time in its composition of families whether coming from the matrix of the animal wastes used or from the inoculations performed. The humus is also free of pathogenic microorganisms due to the type of process applied.

Ultimately, a final aerobic-anaerobic microbiological stabilisation phase is envisioned providing the organic soil-restructuring product and microbiological degrader of chemical substances present therein denominated HUMUS ANENZY.

During the fungal-bacteriological metabolization phase the solid fraction is arranged in piles so to be aerated from below and evaporate on the top and vice versa. In addition, the various operations performed in this phase must follow a relatively precise schedule correlated with the lunar phases.

It is specified that in all phases, during the formation of the mix of animal and possibly vegetable wastes, in the anaerobic digestion, in the vermicomposting, then in the aerobic digestion and finally in the fungal-bacterial metabolization, the biomass is inoculated with the consortium of microorganisms "ENZYVEBA". This is a consortium of non genetically modified bacterial and fungal microorganisms that contains strains that degrade pollutants such as PCBs, IPA and diesel fuel and that is suitably prepared for this purpose and titred with the strains most appropriate to every phase and best adapted to the final objective of the product "HUMUS ANENZY", such as the degradation of chemical substances present in agricultural soils. Such consortium of microbes is produced by the Marcopolo Engineering S.p.A. Sistemi Ecologici and is marketed by the TERRA S.r.l. RICERCA&SVILUPO company.

More specifically, the method disclosed in the present description, envisions an initial mixing of the biomass of animal and possibly vegetable origin, to which, optionally and on request of the final client, agro-industrial byproducts can be added. The biomass of animal origin can be constituted of a mix of bovine, porcine, poultry, equine and ovine wastes. During the mixing phase an inoculation is performed with a consortium of microorganisms chosen according to the type/quality of each animal waste used in the mix, wherein such consortium functions as a catalyst and is susceptible of initiating an enzymatic digestion of such biomasses. The mixing phase, the principle objective of which is to obtain a mixture equilibrated between carbon and microbial charge through homogenization of the biomasses, and the successive inoculation with a consortium of microorganisms, can start and take place directly at the livestock farm producing the waste.

Successive to this preliminary mixing phase, one embodiment of the method according to the present invention envisions the following phases:
a) an anaerobic and/or aerobic digestion of the biomasses by means of a consortium of microorganisms susceptible of activating and maintaining the above-said digestion that takes place enzymatically in the course of the anaerobic or aerobic process and that is operated through a series of daily inoculations for the entire duration of the digestion itself, which has a duration of approximately sixty days. A solid/liquid separation follows at the end of such process and an at least partially digested solid fraction is obtained;
b) a vermicomposting of the solid fraction obtained in phase a), and
c) a fungal-bacterial metabolization.

The anaerobic digestion can take place when the biomasses are isolated from the external environment, that is, in absence of oxygen, providing biogas and energy. Under such conditions the microbial digestion results in the consumption of a large part of the carbon, which is converted to biogas and reaches completion after a period of about 40-60 days, providing a liquid fraction called "digested" and a solid fraction. The liquid fraction - once separated from the solid fraction, by a patented technology that provides a solid fraction containing between eighty and ninety percent of all the elements present in the digested - can be employed in hydroponic cultures. The biogas suitably collected can be employed for the production of electrical and thermal energy.

The aerobic digestion takes place when the biomass is allowed to sit in the presence of oxygen in the case in which biogas and energy production is chosen. Such digestion has the function of sanitising the biomasses and reaches completion within about seven days.

The vermicomposting phase occurs downstream of the anaerobic or aerobic digestion and provides a first partial metabolising of the more complex solid fraction of the biomass through digestive tract digestion by annelids and insects suitably added to the digested biomass. The vermicomposting phase occurs in appropriate litters called Bio-Conversion Units (UBC) having a surface equal to approximately one square meter. They are part of a Bio-Conversion litter (LBC) having an overall surface equal to, preferably, 80 square meters that correspond to an environment that, for its dimensions (width, length, height), provide the earthworms and other insects with improved living conditions in addition to optimal aeration and rainwater drainage. The UBC and LBC, in turn, are part of multiple Bio-Conversion Batteries (BBC) equal the to the litter surface useful to contain each day the correct amount of solid and/or liquid biomass to feed the earthworms and/or insects. During the entire vermicomposting period, which varies from six to twelve months according to the climate, there are inoculation phases of microorganisms in quantities defined by those skilled in the art according to the type of animal waste used upstream and to the type of chemical products normally present in the agricultural soil to undergo bioremediation and microbiological restructuring. In addition, during the same period aeration phases occur through appropriate moving equipment that moves the biomasses and injects aeriform substances, in particular air.

The solid fraction obtained at the completion of the vermicomposting phase, an earthworm humus that is visibly like a very friable soil, is thereafter subjected to phase c) of fungal-bacterial metabolization.

During the fungal-bacterial metabolization the solid fraction is subjected to:
c1) periodic inoculations with a consortium of microorganisms following the lunar phases and the atmospheric pressure, resulting in further digestion of the solid fraction;
c2) movement (dynamism) and oxidation;
c3) injection of air, optionally micro-activated and enriched with powdered minerals, a mixture of vegetable oils and salts and/or miccorhizea.

To better conduct the fungal-bacterial metabolization phase the solid fraction removed from the UBC is arranged in piles aerated from the bottom, covered with a transpiring fabric or with a grass lawn that allows for transpiration.

The area designated for phase c) is equipped with a device, for example, a mechanical device with needles, allowing inoculation with the consortium of microorganisms and the injection of enriched air in the solid fraction. Such mechanical device with needles is constituted by equipment composed of large vibrating needles having the capacity to inject micro-activated air and move the overlying mass.

Phase c3) envisions the injection of air at a temperature preferably included between 55 and 60°C. The mixture of vegetable oils and salts is preferably constituted by a mixture of vegetable oils suitably prepared and denominated RC600 produced by the TERRA S.r.l. RICERCA&SVILUPPO company and constituted by an aqueous base containing esters of vegetable fatty acids and a natural stabilizing agent to which a mixture of mineral salts is added suitably prepared according to the requirements of the final client who uses the HUMUS ANENZY. Such mixture can be prepared with mineral salts such as nitrogen-phosphorus-potassium-magnesium needed for the soil and for the cultures for which the HUMUS ANENZY will be used. In addition, it can be further bioactivated with microorganisms extracted from the consortium "ENZYVEBA" and specialized in the degradation of particular chemical substances particularly difficult to degrade.

The fungal-bacterial metabolization phase envisions that the single operations c1) to c3) are performed according to a precise schedule. Specifically, the operation c1) of inoculation with a consortium of microorganisms takes place seven days before each new moon; the c2) phase is performed in the seven days after the new moon, while the c3) phase of air injection, possibly with oils and minerals, is carried out in the last two days of the full moon and possibly with low atmospheric pressure.

The phases c1) to c3) are repeated for a minimum of twelve times, bringing the duration of this phase to about twelve months.

At the end of phase c) of fungal-bacterial metabolization, the solid fraction obtained is subjected to another phase d) of aerobic-anaerobic microbiological stabilization with a duration of about 3-6 months, wherein the solid fraction is maintained in covered piles. This is a resting phase of the product obtained according to the method described herein (denominated humus Anenzy) in a climate-controlled environment with a temperature included between 15° - 25°C in the presence of dry air.

The agent for the treatment of soils, defined also as organic microbiological restructuring product "HUMUS Anenzy", obtained at the end of the above-described process has characteristics unique for the concentration and variety of specialized microorganisms and is advantageously used in the bioremediation treatment of agricultural soils that have problems of stress, salinity, overuse, and again accumulation of agrochemicals, pesticides and fertilizers. In fact, the above-said agent for the treatment of soils contains an extremely diverse, microbiologically stable and highly specialised microbial charge, above all, free of pathogenic microorganisms and capable of degrading possible damaging substances (for example, polluting agrochemical agents, etc.) and/or performing a controlling action of possible plant pathogen microorganisms present in the soil and of cooperating with the root apparatus of the plants allowing vigorous growth and improved utilisation of the nutritional resources of the soil itself.

The consortium of microorganisms added both to the starting material biomasses and in the other phases of the method described herein is essentially constituted of anaerobic bacteria, aerobic bacteria, streptomyces and fungi and is available on the market with the commercial name of Enzyveba Nucleo Base. It was established after twenty years of research activity at the company Marcopolo Engineering S.p.A. and is presently produced and distributed by the company TERRA S.r.l. RICERCA&SVILUPPO.

Thermophilic bacteria prevail among the anaerobic bacteria present in the above-said consortium, while mesophilic bacteria prevail among the aerobic bacteria.

The consortium of microorganisms, due to the diverse enzymes that the diverse bacteria and streptomyces present have, is capable of performing, among other things, the enzymatic digestion of the organic fractions through the action of enzymes such as: lipases, amylases, cellulases, esterases, and ester-lipases in addition to phosphate solubilising reactions. The diverse enzymatic activities and the numerous bacterial species contained in the consortium of microorganisms result in an elevated degrading activity, mainly on substrates of organic origin, as well as a bio-controlling action against bacterial and fungal plant pathogens exerted, principally but not only, by chitinolytic enzymes. The degrading activity of the consortium of microorganisms can reach the production of amino acids and amino sugars useful to the microorganisms living in the soil and that interact positively with the root apparatus of the cultivated plants, promoting development and growth. In addition, the consortium of microorganisms is capable of degrading substances such as peptin, lignin, chitin, keratin, latex, aromatic compounds, gasoline and diesel fuel, such that its use in the context of the method described herein provides an organic microbiological restructuring product for use in the agricultural field to improve both the health status of depleted soils, and their productive capacities of soils not yet completely exhausted.

Naturally, the details and embodiments can vary widely with respect to what was described and illustrated without departing from the scope of the present invention, as defined by the annexed claims.

## Claims

1. A method for the production of an agent for the treatment of agricultural soils starting from biomasses of animal origin, the method comprising:
a) a microbial digestion of the biomasses performed through at least one inoculation with a consortium of microorganisms susceptible of activating the above-said digestion obtaining a solid digested fraction;
b) a vermicomposting of the digested solid fraction obtained in phase a);
c) a fungal-bacterial metabolization of the solid fraction obtained in phase b),
wherein the fungal-bacterial metabolization envisions:
c1) at least one inoculation of the solid fraction with a consortium of microorganisms susceptible of activating a further enzymatic digestion;
c2) movement and oxidation of the inoculated solid fraction;
c3) at least one injection of the solid fraction *with aeriforms, preferably air,
such to obtain said agent for the treatment of agricultural soils.

2. The method according to claim 1, wherein phase a) of biomass digestion envisions at least one daily inoculation with said consortium of microorganisms for the entire duration of the digestion.

3. The method according to claim 1 or claim 2, in which the phase c1) of inoculation with a consortium of microorganisms is performed seven days before each new moon.

4. The method according to any of the previous claims, wherein the phase c2) of movement is performed during the seven days successive to each new moon.

5. The method according to any of the previous claims, wherein the phase c3) of injection is performed in the last two days of each full moon.

6. The method according to any of the previous claims, wherein during the phase c) of fungal-bacterial metabolization the solid fraction is arranged in piles aerated from below, preferably covered with a transpiring fabric or grass lawn.

7. The method according to any of the previous claims, wherein the phases c1) to c3) are repeated at least ten times, preferably at least twelve times.

8. The method according to any of the previous claims, wherein the phase c3) envisions the injection of an aeriform at a temperature included between 50° and 65°C, preferably between 55° and 60°C.

9. The method according to any of the previous claims, wherein the phase c3) envisions, in addition, the injection of vegetable fatty acid esters to which a natural stabilising agent, mineral salts and/or miccorhizea are associated.
